# EUROPÄISCHE PATENTANMELDUNG

(11) **EP 2 334 141 A1**
(43) Veröffentlichungstag der Anmeldung: **15.06.2011**
(21) Anmeldenummer: 09178862.0
(22) Anmeldetag: 11.12.2009
(51) Int. Cl.: H05B 3/84

(54) **Beschichtete Scheibe mit beheizbarem Kommunikationsfenster**

(71) Anmelder: Saint-Gobain Glass France, 92400 Courbevoie (FR)
(72) Erfinder: Schall, Günther, 52372 Kreuzau (DE); Reul, Bernhard, 52134 Herzogenrath (DE); Lisinski, Susanne, 50739 Köln (DE); Phan, Dang Cuong, 52062 Aachen (DE); Lesage, Jean-Luc, 60200 Compiègne (FR)
(74) Vertreter: Lendvai, Tomas

(57) **Zusammenfassung**

Die Erfindung betrifft eine elektrisch großflächig beheizbare, transparente Scheibe (1), umfassend:
- eine großflächige, elektrisch leitfähige, transparente Beschichtung (3) aufgebracht auf einem transparenten Substrat (2),
- mindestens zwei Stromsammelbänder (4) elektrisch verbunden mit der elektrisch leitfähigen transparente Beschichtung (3),
- mindestens einen örtlich begrenzten, von der Beschichtung (3) freien Bereich (5),

wobei innerhalb des freien Bereichs (5) mindestens ein Heizleiter (8) mit zwei Polen (8.1)(8.2) aufgebracht ist und wobei der erste Pol (8.1) mit der elektrisch leitfähigen transparenten Beschichtung (3) elektrisch verbunden ist und der zweite Pol (8.2) mit der elektrisch leitfähigen transparenten Beschichtung (3) oder einem Stromsammelband (4) elektrisch verbunden ist.

Die Erfindung betrifft weiter ein Verfahren zu deren Herstellung und deren Verwendung.

## Beschreibung

Die Erfindung liegt auf dem Gebiet von Scheiben mit Kommunikationsfenstern für Sensoren und Kamerasysteme, ein Verfahren zu deren Herstellung und deren Verwendung.

Fahrzeuge, Flugzeuge, Hubschrauber und Schiffe sind zunehmend mit verschiedenen Sensoren oder Kamerasystemen ausgestattet. Beispiele sind Kamerasysteme, wie Videokameras, Nachtsichtkameras, Restlichtverstärker, Laserentfernungsmesser oder passive Infrarotdetektoren. Auch werden beispielsweise zur Mauterfassung zunehmend Fahrzeug-Identifikationssysteme eingesetzt.

Kamerasysteme können Licht im ultravioletten (UV), sichtbaren (VIS) und infraroten Wellenlängenbereich (IR) nutzen. Damit lassen sich auch bei schlechten Witterungsverhältnissen, wie Dunkelheit und Nebel, Gegenstände, Fahrzeuge sowie Personen präzise erkennen. Diese Kamerasysteme können in Kraftfahrzeugen hinter der Windschutzscheibe im Fahrgastraum platziert werden. Damit bieten sie auch im Straßenverkehr die Möglichkeit, Gefahrensituationen und Hindernisse rechtzeitig zu erkennen.

Aufgrund ihrer Empfindlichkeit gegenüber Witterungseinflüssen oder Fahrtwinden müssen derartige Sensoren aber in allen Fällen durch für Strahlung transparente Scheiben geschützt werden. Der Sensor kann innerhalb eines Fahrzeuges angebracht werden. Um eine optimale Funktion der optischen Sensoren zu gewährleisten, sind saubere und beschlagsfreie Scheiben zwingend notwendig. Beschlag und Vereisungen behindern die Funktionsweise deutlich, da sie die Transmission elektromagnetischer Strahlung deutlich reduzieren. Während für Wassertropfen und Schmutzpartikel Wischsysteme eingesetzt werden können, reichen diese in der Regel bei Vereisung nicht aus. Hierbei sind Systeme notwendig, die das dem Sensor zugeordnete Scheibensegment bei Bedarf zumindest kurzzeitig aufheizen und damit einen unterbrechungsfreien Einsatz ermöglichen.

Scheiben weisen zunehmend vollflächige elektrisch leitfähige und für sichtbares Licht transparente Beschichtungen auf, die beispielsweise Innenräume vor Überhitzung durch Sonnenlicht oder Auskühlung schützen oder beim Anlegen einer elektrischen Spannung eine gezielte Erwärmung der Scheibe bewirken. Die Scheiben mit elektrisch leitfähigen transparenten Beschichtungen sind aber als transparente Schutzscheiben für Sensoren oder Kamerasysteme nicht geeignet, da informationstragende Strahlung nicht ausreichend durch die Beschichtung hindurch transmittiert wird. Die Scheiben werden daher üblicherweise örtlich begrenzt entschichtet und bilden ein Kommunikationsfenster für Sensoren und Kamerasysteme

EP 1 605 729 A2 offenbart eine elektrisch beheizbare Scheibe mit einem Kommunikationsfenster. Dieses Kommunikationsfenster wird über eine Heizvorrichtung beschlags- und eisfrei gehalten. Das Heizelement wird an der Position des Kommunikationsfensters in die Scheibe einlaminiert. Zusätzlich kann an der Scheibenoberfläche noch ein zusätzliches Heizelement angebracht werden. Das zusätzliche Heizelement wird bevorzugt als leitfähige Paste auf die Scheibenoberfläche gedruckt.

Dabei ist es allerdings notwendig, die Heizleiter zur Versorgung mit elektrischer Energie über stromführende Bänder mit einer Spannungsversorgung elektrisch zu kontaktieren.

Aufgabe der Erfindung ist es, eine Scheibe mit einer verbesserten Heizvorrichtung für Kommunikationsfenster bereitzustellen.

Eine weitere Aufgabe der Erfindung ist es, ein neues Verfahren zur Herstellung von Scheiben mit einer verbesserten Heizvorrichtung für Kommunikationsfenster sowie eine neue Verwendung zu finden.

Die Aufgaben werden durch die in den unabhängigen Patentansprüchen 1, 12 und 15 aufgeführten Merkmale gelöst. Bevorzugte Ausgestaltungen der Erfindung sind durch die Merkmale der abhängigen Patentansprüche gegeben.

Ein wesentlicher mit der Erfindung erzielter Vorteil besteht darin, dass Heizleiter für Kommunikationsfenstern über die elektrisch leitfähige transparente Beschichtung der Scheibe elektrisch kontaktiert sind und mit elektrischer Energie versorgt werden. Die Versorgungsspannung wird über den Spannungsabfall bereitgestellt, der sich über den Kommunikationsfenstern in der elektrisch leitfähigen transparenten Beschichtung einstellt. Eine zusätzliche und üblicherweise opake elektrische Verbindung zu dem Heizleiter des Kommunikationsfensters kann entfallen.

Übliche elektrische Spannungen zur Versorgung der großflächigen Scheibenheizung betragen 14 V DC oder 42 V DC für konventionelle Kraftfahrzeuge, aber auch bis zu 400 V DC für Kraftfahrzeuge mit elektrischen Antriebskomponenten.

Der Spannungsabfall über dem Kommunikationsfenster berechnet sich aus dem Verhältnis der Ausdehnung der Kommunikationsfenster vertikal zu den Äquipotentiallinien und dem Abstand der Stromsammelbänder, gewichtet mit der Versorgungsspannung für die großflächige Scheibenheizung zwischen den Stromsammelbändern.

Die erfindungsgemäßen Scheiben sind in der Größe den Anforderungen an übliche Verglasungen von Fahrzeugen angepasst. Die Scheiben haben bevorzugt eine Höhe und eine Breite von 10 cm bis 200 cm. Die Scheiben sind bevorzugt als Verbundglasscheiben mit einer haftvermittelnden Polymerschicht ausgestaltet. Die Scheiben enthalten bevorzugt Silikatgläser mit einer Dicke von 0,8 mm bis 4 mm.

Breite bedeutet hier bei einer vertikal stehenden Scheibe die horizontale Ausdehnung, Höhe die vertikale Ausdehnung.

Die Kommunikationsfenster sind in Ihrer Breite und Höhe nach den Erfordernissen üblicher Sensoren und Kamerasysteme für Fahrzeuge ausgelegt. Die erfindungsgemäßen Kommunikationsfenster weisen bevorzugt eine Breite von 5 cm bis 200 cm und eine Höhe von 5 cm bis 200 cm auf, um ausreichend große Bereiche zur Transmission der Strahlengänge der Sensoren und Kamerasysteme bereitzustellen. Besonders bevorzugt sind die Kommunikationsfenster im Randbereich von Fahrzeugverglasungen außerhalb des A-Sichtfeldes gemäß ECE-R 43:2004 angeordnet.

Elektrisch leitfähige, transparente Beschichtungen der Scheiben enthalten bevorzugt Schichtfolgen mit Indium-Zinn-Oxid, Zink-Oxid, Zinn-Oxid, Ga, Al, Ag, Au oder Gemische davon. Die Gesamtdicke der elektrisch leitfähigen und transparenten Beschichtungen beträgt bevorzugt 20 nm bis 1 µm. Die elektrisch leitfähigen, transparenten Beschichtungen weisen für sichtbares Licht eine hohe Transmission von > 70 % auf. Infrarotstrahlung wird teilweise reflektiert.

Der Schichtwiderstand der elektrisch leitfähigen Beschichtung beträgt bevorzugt 0,5 Ohm pro Quadrat bis 100 Ohm pro Quadrat.

Die Beschichtungen sind bevorzugt vollflächig auf der Scheibe aufgebracht. Die beschichteten Scheiben können teilweise entschichtet und bevorzugt randentschichtet sein.

Um eine Konzentration der Heizleistung im Strahlengang der Sensor und Kamerasysteme zu erzielen, ist es gemäß der Erfindung besonders günstig, wenn die Heizleiter als gerade, mäanderförmige oder wellenförmige Linien ausgestaltet sind.

Die Heizleistung der Heizleiter berechnet sich aus deren materialspezifischen elektrischen Widerstand, deren Länge, deren Breite und deren Höhe.

Die Flächendichte der Heizleistung kann erfindungsgemäß durch die räumliche Anordnung der Heizleiter im Kommunikationsfenster eingestellt werden, bevorzugt durch ganzen oder teilweisen parallelen, enggebündelten oder ineinandergreifenden Verlauf.

Der Abstand zwischen den Heizleitern beträgt gemäß der Erfindung bevorzugt 5 mm bis 15 mm.

Der Heizleiter ist erfindungsgemäß 0,05 mm bis 20 mm und bevorzugt 0,1 bis 5 mm und besonders bevorzugt 0,15 mm bis 1 mm breit.

In einer Ausgestaltung der Erfindung ist der Heizleiter an Polen über niederohmige Kontaktierungslinien mit der elektrisch leitfähigen, transparenten Beschichtung elektrisch verbunden. Die Kontaktierungslinien sind bevorzugt im Vergleich zum Heizleiter verbreitert.

In einer vorteilhaften Ausgestaltung der Erfindung sind Heizleiter über Knotenpunkte und mindestens zwei Kontaktierungslinien mit der elektrisch leitfähigen transparenten Beschichtung verbunden. Der Stromfluss wird auf mehrere Kontaktierungslinien verteilt und die Stromdichte pro Kontaktierungslinie reduziert.

Gemäß der Erfindung ist es besonders vorteilhaft, wenn die Kontaktierungslinien und Knotenpunkte kammförmig ausgebildet sind und eine Vielzahl von Kammspitzen mit der elektrisch leitfähigen transparenten Beschichtung kontaktiert ist. Der Spannungsabfall und die sich einstellenden Ströme werden bereits im Bereich des Kommunikationsfensters ohne Kontakt mit der elektrisch leitfähigen transparenten Beschichtung homogenisiert.

Inhomogene thermische Belastungen aufgrund von inhomogen verteilten Strömen auf der elektrisch leitfähigen transparenten Beschichtung werden verhindert.

Der Abstand zwischen den Kontaktierungslinien auf der elektrisch leitfähigen transparenten Beschichtung beträgt bevorzugt 1 mm bis 30 mm, besonders bevorzugt 5 mm bis 15 mm.

Eine besonders vorteilhafte thermische Entlastung der Kontaktierungslinien wird erzielt, wenn der Abstand gemäß der Erfindung zwischen den Kontaktierungslinien auf der elektrisch leitfähigen transparenten Beschichtung konstant ist.

Zur Erhöhung der Fläche der Kontaktflächen sind die Kontaktierungslinien mit der elektrisch leitfähigen transparenten Beschichtung auf einer Länge von 0,5 mm bis 100 mm, bevorzugt 1 mm bis 50 mm, besonders bevorzugt von 3 mm bis 10 mm elektrisch verbunden.

Eine homogene Temperaturverteilung der Kontaktierungslinien wird gemäß der Erfindung erzielt, wenn die Kontaktbereiche mit der elektrisch leitfähigen Beschichtung parallel von Äquipotentiallinien der elektrisch leitfähigen transparenten Beschichtung verbreitert sind. Die Verbreiterung ist bevorzugt dreieckig, rechteckig, oval, rund oder vieleckig ausgestaltet. Lokale Überhitzungen auf der elektrisch leitfähigen und transparenten Beschichtung werden reduziert.

Die Heizleistung kann besonders vorteilhaft im Kommunikationsfenster angeordnet werden, wenn der Heizleiter aus einer leitfähigen Siebdruckpaste und bevorzugt aus einer silberhaltigen Siebdruckpaste gebildet wird.

In einer alternativen Ausgestaltung der Erfindung kann der Heizleiter auch mit Metall-Draht, bevorzugt mit Silber, Gold, Kupfer, Aluminium, Platin oder Wolfram-Draht gebildet werden.

Die Stromsammelbänder und die Kontaktierungslinien bestehen erfindungsgemäß bevorzugt aus leitfähiger Siebdruckpaste und bevorzugt aus silberhaltiger Siebdruckpaste.

Die Schichtdicke des Heizleiters beträgt 1 µmbis 50 µm, besonders bevorzugt 5 µm bis 30 µm.

Es wurde weiter ein erfindungsgemäßes Verfahren zur Herstellung einer elektrisch großflächig beheizbaren, transparenten Scheibe gefunden, wobei eine elektrisch leitfähige, transparente Beschichtung auf eine transparente Scheibe aufgebracht wird. Die elektrisch leitfähige, transparente Beschichtung wird in einem örtlich begrenzten Bereich entfernt, mindestens zwei Stromsammelbänder werden auf die elektrisch leitfähige, transparente Beschichtung aufgebracht und mit der elektrisch leitfähigen transparente Beschichtung elektrisch verbunden. Mindestens ein Heizleiter und Kontaktierungslinien werden aufgebracht und an einem ersten Pol mit der elektrisch leitfähigen transparenten Beschichtung elektrisch verbunden. An einem zweiten Pol werden der Heizleiter und die Kontaktierungslinien mit der elektrisch leitfähigen transparenten Beschichtung oder einem Stromsammelband elektrisch verbunden.

Die elektrisch leitfähige transparente Beschichtung wird bevorzugt durch physikalische und chemische Abscheidung aus der Gasphase, besonders bevorzugt durch Kathodenzerstäuben aufgebracht.

In einer weiteren bevorzugten Ausführungsform des erfindungsgemäßen Verfahrens wird die elektrisch leitfähige, transparente Beschichtung in einem örtlich begrenzten Bereich mit Laser-Ablation oder mechanischer Abrasion entfernt.

In einer bevorzugten Ausführungsform des Verfahrens werden die Stromsammelbänder, Kontaktierungslinien und / oder der Heizleiter in einem Siebdruck-, Inkjet-, Impulsjet-, Gravurwalzen-, oder Offsetdruckverfahren hergestellt.

Das bevorzugte Verfahren hat insbesondere den Vorteil, dass die Stromsammelbänder, die Kontaktierungslinien und Heizleiter in einem Verfahrensschritt aufgebracht und elektrisch verbunden werden.

Es wurde weiter eine Verwendung einer elektrisch großflächig beheizbaren, transparenten Scheibe als beheizbare und / oder Wärmestrahlung reflektierende Verbundglaswindschutzscheibe mit beheizbaren Kommunikationsfenstern gefunden.

Es zeigen,
Figur 1 eine Draufsicht auf ein Ausführungsbeispiel einer elektrisch großflächig beheizbaren, transparenten Scheibe (1),
Figur 2 ein Kommunikationsfenster (5) des Ausführungsbeispiels gemäß Figur 1 in einer vergrößerten Darstellung,
Figur 3 ein alternatives Kommunikationsfenster (5) eines Ausführungsbeispiel der elektrisch großflächig beheizbaren, transparenten Scheibe (1),
Figur 4 ein weiteres alternatives Kommunikationsfenster (5) eines Ausführungsbeispiel der elektrisch großflächig beheizbaren, transparenten Scheibe (1),
Figur 5 ein weiteres alternatives Kommunikationsfenster (5) eines Ausführungsbeispiel der elektrisch großflächig beheizbaren, transparenten Scheibe (1),
Figur 6 ein weiteres alternatives Kommunikationsfenster (5) der elektrisch großflächig beheizbaren, transparenten Scheibe (1),
Figur 7 eine Draufsicht auf ein alternatives Ausführungsbeispiel einer elektrisch großflächig beheizbaren, transparenten Scheibe (1) und
Figur 8 ein detailliertes Ausführungsbeispiel eines erfindungsgemäßen Verfahrens in einem Flussdiagramm.

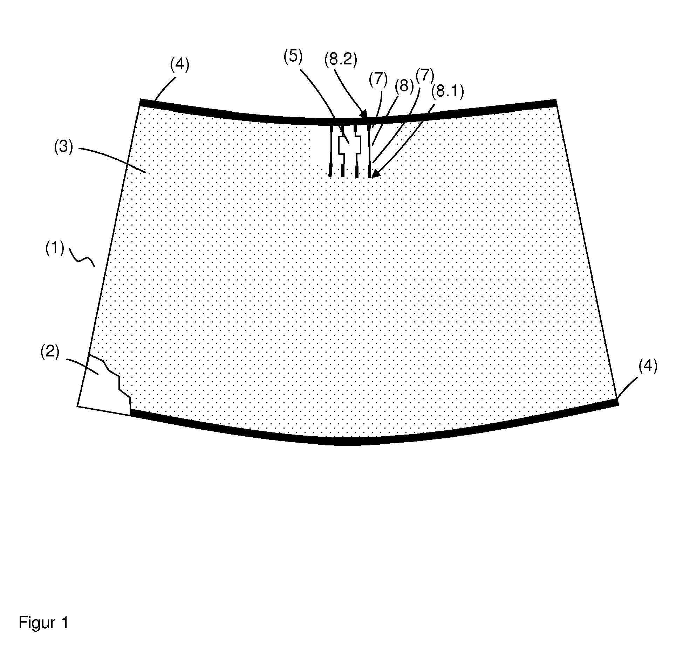

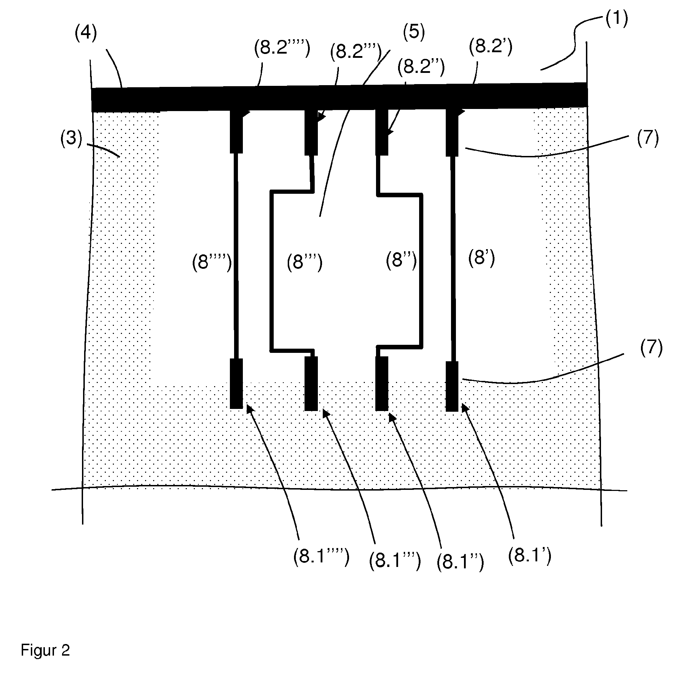

Figur 1 und Figur 2 zeigen eine erfindungsgemäße 100 cm hohe und 120 cm breite Verbundglaswindschutzscheibe (1) mit einem 10 cm hohen und 20 cm breiten beheizbarem Kommunikationsfenster (5) für Fahrzeuge. Zur großflächigen Beheizung und zum Wärmeschutz war auf eine Glasscheibe (2) eine elektrisch leitfähige, transparente und Infrarotstrahlung reflektierende Beschichtung (3) aufgebracht. Die Beschichtung (3) hatte einen Schichtwiderstand von 1 Ohm pro Quadrat und enthielt eine transparente, 5 nm bis 15 nm dicke, Silberschicht. An zwei Rändern der Glasscheibe (2) war die elektrisch leitfähige transparente Beschichtung (3) mit opaken silberhaltigen 25 µmdicken Stromsammelbändern (4) elektrisch verbunden. Die Stromsammelbänder waren mit einer nicht dargestellten Spannungsversorgung von 14 V elektrisch verbunden. Der Stromfluss über die Stromsammelbänder betrug 35 A. Die elektrische Gesamtheizleistung der Scheibe (1) betrug etwa 500 W. Die Scheibe (1) war als eine Verbundglasscheibe ausgeführt. Die elektrisch leitfähige transparente Beschichtung (3) war auf einer Innenseite der Verbundglaswindschutzscheibe (1) aufgebracht. Die Verbundglaswindschutzscheibe (1) hatte für sichtbares Licht eine Transparenz von mindestens 70 %. Infrarotstrahlung wurde reflektiert. Am oberen Rand der Verbundglaswindschutzscheibe (1) war auf der dem Innenraum zugewandten Seite eine nicht dargestellte IR-Kamera angebracht. Im Strahlengang für die IR-Kamera und im angrenzenden Bereich war durch eine Aussparung in der elektrisch leitfähigen, transparenten Beschichtung (3) ein für Infrarotstrahlung transparentes Kommunikationsfenster (5) ausgebildet. Innerhalb des Kommunikationsfensters (5) in unmittelbarer Umgebung des Strahlengangs der IR-Kamera waren vier opake linienförmige Heizleiter (8',8",8"',8"") auf der Glasscheibe (2) aufgebracht. Die Linienbreite der Heizleiter (8',8",8"',8"") betrug 0,5 mm. Die Heizleiter (8) waren parallel geschaltet und bildeten ein elektrisches Netzwerk. Die Heizleiter (8) aus Silbersiebdruckpaste wiesen eine Schichtdicke von 25 µmauf. Der kumulierte Stromfluss durch das Netzwerk der Heizleiter (8) betrug etwa 5,5 A. Der Spannungsabfall über das Netzwerk der Heizleiter (8) betrug etwa 1,4 V. Die kumulierte Heizleistung des Netzwerks der Heizleitern (8) betrug etwa 7,5 W. Der ohmsche Widerstand des Netzwerks der Heizleiter (8) betrug etwa 0,25 Ohm. Die Heizleiter (8',8",8"',8"") waren an Polen (8.1',8.1 ",8.1 "',8.1 "") über Kontaktierungslinien (7) auf einer Breite von 2 mm und einer Länge von 5 mm mit der elektrisch leitfähigen transparenten Beschichtung (3) elektrisch verbunden. An zweiten Polen (8.2',8.2",8.2"',8.2"") wurden die Heizleiter (8',8",8"',8"") jeweils direkt über eine weitere Kontaktierungslinien (7) mit einem Stromsammelband (4) elektrisch verbunden. Feuchtigkeit, Wasser und Eisansammlungen an der Verbundglaswindschutzscheibe (1) im Bereich des Kommunikationsfensters (5) konnten verhindert werden. Die Spannungsversorgung der Heizleiter (8',8",8"',8"") wurde mit der elektrisch leitfähigen transparenten Beschichtung (3) realisiert. Die Heizleistung wurde durch Abstimmung des spezifischen elektrischen Widerstandes, der Schichtdicke, Länge und Breite des Netzwerks der Heizleiter (8',8",8"',8"") eingestellt. Es war für den Fachmann überraschend und nicht vorhersehbar, dass auf einfache Art und Weise über die elektrisch leitfähige transparente Beschichtung (3) eine Spannungsversorgung für Heizleiter (8',8",8"',8"") von Kommunikationsfenstern (5) bereitgestellt werden konnte.

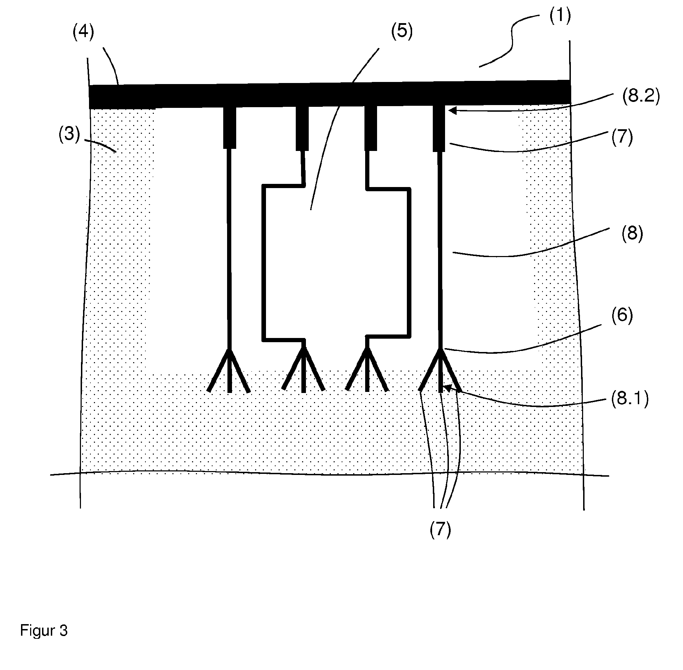

Figur 3 zeigt eine alternative erfindungsgemäße Ausgestaltung des Kommunikationsfensters gemäß der Figur 2. Zur Reduzierung der thermischen Belastung der Kontaktierungslinien (7) im Bereich der elektrisch leitfähigen Beschichtung (3) waren die Heizleiter (8) über einen Knotenpunkt (6) und mehrere Kontaktierungslinien (7) jeweils mit der elektrisch leitfähigen transparenten Beschichtung (3) elektrisch verbunden.

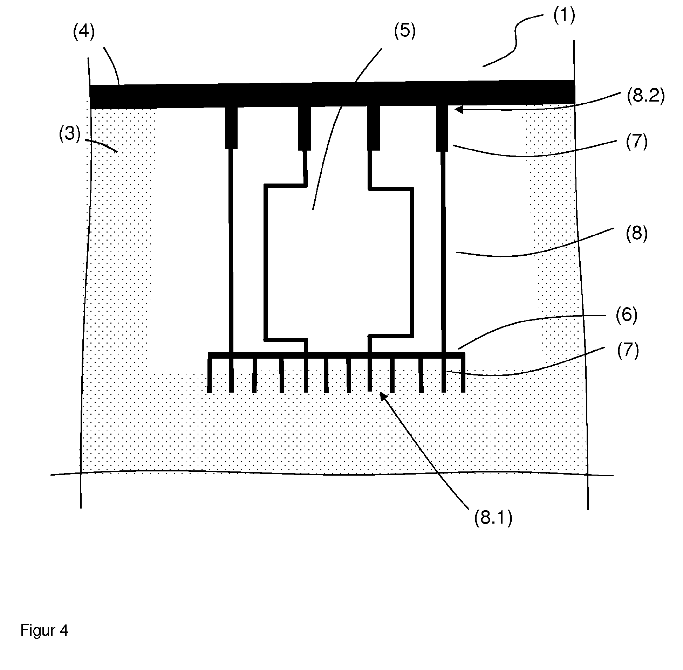

Figur 4 zeigt eine weitere erfindungsgemäße kammartige Ausgestaltung. Die Heizleiter (8) waren in einem Stromsammelband (6) im Kommunikationsfenster parallel geschaltet. Ein Stromsammelband als Knotenpunkt (6) war direkt auf der Glasscheibe (2) aufgebracht und hatte keinen direkten Kontakt zur elektrisch leitfähigen transparenten Beschichtung (3). Kontaktierungslinien (7) mit einem Abstand von 5 mm stellten die elektrische Verbindung zur elektrisch leitfähigen transparenten Beschichtung (3) her. Die Stromdichten in den Kontaktierungslinien (7) waren geringer als in den Heizleitern (8). Die thermische Belastung der Kontaktierungslinien (7) war im Kontaktbereich mit der elektrisch leitfähigen transparenten Beschichtung (3) minimiert.

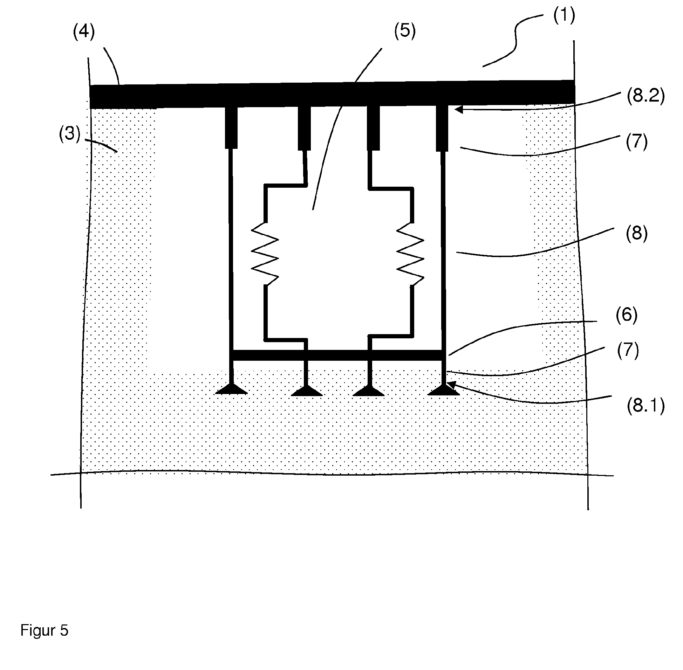

Figur 5 zeigt eine weitere alternative Ausgestaltung der Erfindung. Die Kontaktierungslinien (7) überdeckten die elektrisch leitfähige, transparente Beschichtung (3) auf einer Länge von 10 mm und waren in der Form eines Dreiecks ausgestaltet. Die längste Kante der Verbreiterung lief parallel den Äquipotentiallinien der elektrisch leitfähigen transparenten Beschichtung (3). Durch die Verbreiterung der Kontaktierungslinien (7) wurden die Stromdichten reduziert und insbesondere die Kontaktbereiche mit der elektrisch leitfähigen transparenten Beschichtung (3) thermisch entlastet. Zur Konzentration der Heizleistung im Zentrum des Kommunikationsfensters (5) wiesen die Heizleiter (8) eine geringere Linienbreite von 0,15 mm auf und waren in unmittelbarer Umgebung des Strahlengangs der Infrarotkamera mäanderförmig ausgebildet.

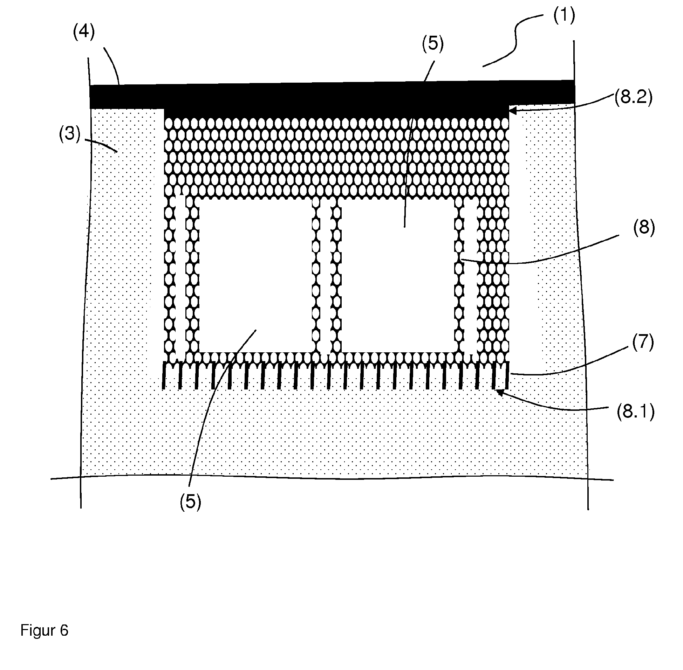

Figur 6 zeigt eine weitere Ausgestaltung der Erfindung. Die Heizleiter (8) und die Kontaktierungslinien (7) wurden aus einer Siebdruckpaste mit Lochmuster gebildet. Durch diese Ausführungsform konnte der elektrische Schichtwiderstand und in der Folge die Stromdichte in den Heizleitern (7) genauer eingestellt werden. Die Heizleiter (8) waren der Form nach Bandfilterstrukturen von Fahrzeugscheiben angepasst sind. Es wurde für den Betrachter eine homogene ästhetische Ausführung erzielt.

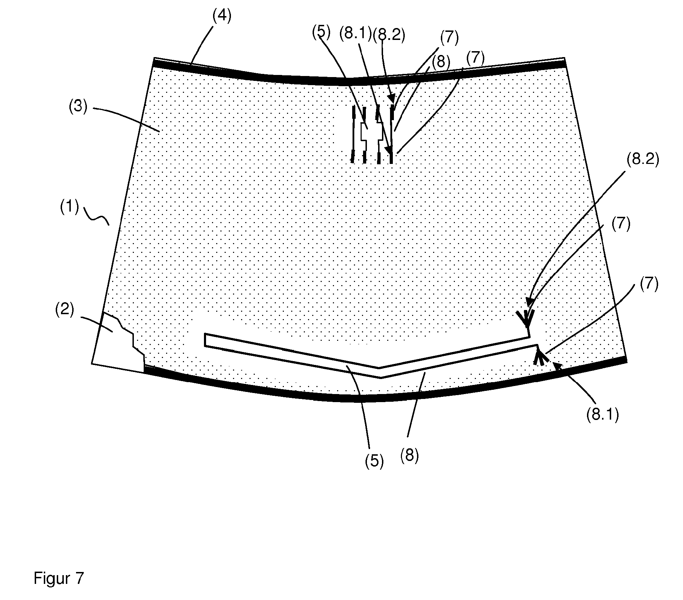

Figur 7 zeigt eine Draufsicht auf eine erfindungsgemäße Verbundglaswindschutzscheibe (2) mit zwei Kommunikationsfenstern (5). Ein Kommunikationsfenster (5) war im oberen Bereich des Fahrzeugs ausgebildet, ein weiteres Kommunikationsfenster (5) in einer üblichen Warteposition von Scheibenwischern. Dadurch konnte auf einfache Weise zusätzlich eine Enteisungsfläche für angefrorene Scheibenwischer erzielt werden. Die Kontaktlinien (7) der Heizleitern (8) waren an beiden Polen (8.1) (8.2) mit der elektrisch leitfähigen Beschichtung (3) verbunden. Es war für den Fachmann überraschend und nicht vorhersehbar, dass eine optimierte Heizleistung der Heizleiter (8) in mehreren Kommunikationsfenstern (5) durch eine einfache Spannungsversorgung über die elektrisch leitfähige transparente Beschichtung (3) bereitgestellt werden konnte.

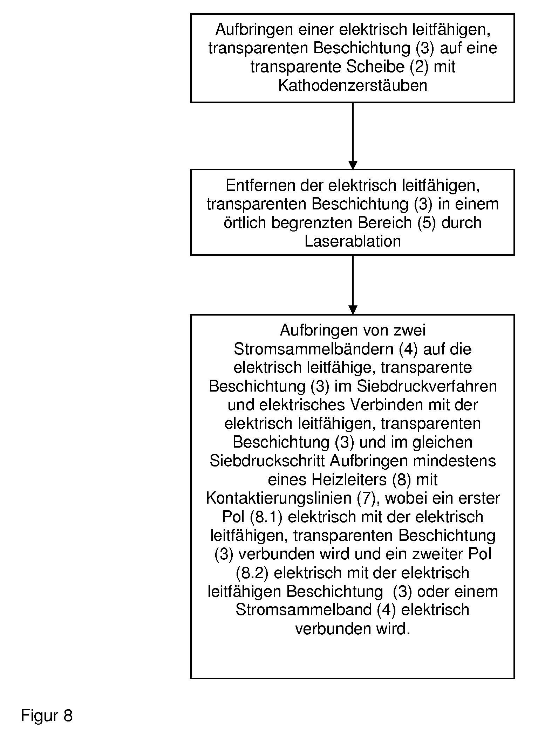

In den Figuren 1 bis 8 haben die Bezugszeichen folgende Bedeutung:
- (1): Transparente Scheibe / Verbundglaswindschutzscheibe
- (2): Transparentes, elektrisch isolierendes Substrat,
- (3): Elektrisch leitfähige transparente Beschichtung,
- (4): Stromsammelband,
- (5): Freier Bereich ohne elektrisch leitfähige transparente Beschichtung (3) / Kommunikationsfenster
- (6): Knotenpunkt
- (7): Kontaktierungslinie
- (8): Heizleiter
- (8.1)(8.2): Pole des Heizleiters (8)

## Patentansprüche

1. Elektrisch großflächig beheizbare, transparente Scheibe (1), umfassend:
- eine großflächige, elektrisch leitfähige, transparente Beschichtung (3) aufgebracht auf einem transparenten elektrisch isolierenden Substrat (2),
- mindestens zwei Stromsammelbänder (4), elektrisch verbunden mit der elektrisch leitfähigen transparenten Beschichtung (3),
- mindestens einen örtlich begrenzten, von der Beschichtung (3) freien Bereich (5),
wobei innerhalb des freien Bereichs (5) mindestens ein Heizleiter (8) mit zwei Polen (8.1)(8.2) aufgebracht ist und wobei der erste Pol (8.1) mit der elektrisch leitfähigen transparenten Beschichtung (3) elektrisch verbunden ist und der zweite Pol (8.2) mit der elektrisch leitfähigen transparenten Beschichtung (3) oder einem Stromsammelband (4) elektrisch verbunden ist.

2. Elektrisch großflächig beheizbare, transparente Scheibe (1) nach Anspruch 1, wobei der Heizleiter (8) eine gerade, mäanderförmige oder wellenförmige Form aufweist.

3. Elektrisch großflächig beheizbare, transparente Scheibe (1) nach Anspruch 1 oder 2, wobei der Heizleiter (8) eine Linienbreite von 0,05 mm bis 20 mm, bevorzugt 0,1 mm bis 5 mm und besonders bevorzugt 0,15 mm bis 1 mm aufweist.

4. Elektrisch großflächig beheizbare, transparente Scheibe (1) nach einem der Ansprüche 1 bis 3, wobei die Pole (8.1) (8.2) mit mindestens einer Kontaktierungslinie (7) verbunden sind.

5. Elektrisch großflächig beheizbare, transparente Scheibe (1) nach einem der Ansprüche 1 bis 4, wobei mindestens zwei Kontaktierungslinien (7) in mindestens einem Knotenpunkt (6) elektrisch verbunden sind.

6. Elektrisch großflächig beheizbare, transparente Scheibe (1) nach Anspruch 5, wobei die Kontaktierungslinien (7) und Knotenpunkte (6) kammförmig ausgebildet sind und die Kontaktierungslinien (7) in der Form von Kammspitzen mit der elektrisch leitfähigen transparenten Beschichtung (3) elektrisch kontaktiert sind.

7. Elektrisch großflächig beheizbare, transparente Scheibe (1) nach einem der Ansprüche 1 bis 6, wobei der Abstand der Kontaktierungslinien (7) 1 mm bis 30 mm, bevorzugt 5 mm bis 15 mm beträgt.

8. Elektrisch großflächig beheizbare, transparente Scheibe (1) nach einem der Ansprüche 1 bis 7, wobei die Kontaktierungslinien (7) auf einer Länge von 0,5 mm bis 100 mm, bevorzugt 1 mm bis 50 mm, besonders bevorzugt von 3 mm bis 10 mm mit der elektrisch leitfähigen Beschichtung (3) elektrisch verbunden sind.

9. Elektrisch großflächig beheizbare, transparente Scheibe (1) nach einem der Ansprüche 1 bis 8, wobei der Abstand zwischen Heizleitern (8) 5 mm bis 15 mm beträgt.

10. Elektrisch großflächig beheizbare, transparente Scheibe (1) nach einem der Ansprüche 1 bis 9, wobei der Heizleiter (8) eine leitfähige Siebdruckpaste und bevorzugt eine silberhaltige Siebdruckpaste enthält.

11. Elektrisch großflächig beheizbare, transparente Scheibe (1) nach einem der Ansprüche 1 bis 10, wobei der Heizleiter (8) eine Schichtdicke von 1 µmbis 50 µmund bevorzugt von 5 µm bis 30 µm aufweist.

12. Verfahren zur Herstellung einer elektrisch großflächig beheizbaren, transparenten Scheibe (1), wobei
a. eine elektrisch leitfähige, transparente Beschichtung (3) auf ein transparentes Substrat aufgebracht wird,
b. die elektrisch leitfähige, transparente Beschichtung (3) in einem örtlich begrenzten Bereich (5) entfernt wird,
c. mindestens zwei Stromsammelbänder (4) auf die elektrisch leitfähige, transparente Beschichtung (3) aufgebracht werden und mit der elektrisch leitfähigen transparenten Beschichtung (3) elektrisch verbunden werden und
d. mindestens ein Heizleiter (8) aufgebracht wird und an einem ersten Pol (8.1) mit der elektrisch leitfähigen transparenten Beschichtung (3) elektrisch verbunden wird und an einem zweiten Pol (8.2) mit der elektrisch leitfähigen transparenten Beschichtung (3) oder einem Stromsammelband (4) elektrisch verbunden wird.

13. Verfahren zur Herstellung einer elektrisch großflächig beheizbaren, transparenten Scheibe (1) nach Anspruch 12, wobei die elektrisch leitfähige, transparente Beschichtung (3) in einem örtlich begrenzten Bereich (5) mit Laser-Ablation oder mechanischer Abrasion entfernt wird.

14. Verfahren zur Herstellung einer elektrisch großflächig beheizbaren, transparenten Scheibe (1) nach Anspruch 12 oder 13, wobei die Stromsammelbänder (4), Kontaktierungslinien (7) und / oder der Heizleiter (8) in einem Siebdruck-, Inkjet-, Impulsjet-, Gravurwalzen-, oder Offsetdruckverfahren hergestellt werden.

15. Verwendung einer elektrisch großflächig beheizbaren, transparenten Scheibe (1) in der Fahrzeugverglasung mit Kommunikationsfenster, bevorzugt als Verbundglaswindschutzscheibe mit Kommunikationsfenster.
